(19) Europäisches Patentamt
European Patent Office
Office européen des brevets

(11) **EP 2 141 843 A1**

(12) **DEMANDE DE BREVET EUROPEEN**

(43) Date de publication:
**06.01.2010 Bulletin 2010/01**

(51) Int Cl.:
*H04J 14/02* *(2006.01)*     *H04Q 11/00* *(2006.01)*

(21) Numéro de dépôt: **09164229.8**

(22) Date de dépôt: **30.06.2009**

(84) Etats contractants désignés:
**AT BE BG CH CY CZ DE DK EE ES FI FR GB GR
HR HU IE IS IT LI LT LU LV MC MK MT NL NO PL
PT RO SE SI SK TR**

(30) Priorité: **30.06.2008   FR 0854399**

(71) Demandeur: **Alcatel Lucent
75008 Paris (FR)**

(72) Inventeurs:
• **Peloso, Pierre
91620, Nozay (FR)**
• **Vigoureux, Martin
91620, Nozay (FR)**

(74) Mandataire: **Thibaud, Jean-Baptiste
Alcatel Lucent
Intellectual Property & Standards
54 rue La Boétie
75008 Paris (FR)**

(54)    **Generation d'une offre d'allocation de longueur d'onde pour une connexion**

(57)    Un procédé de génération d'une offre d'allocation de longueur d'onde pour une connexion dans un réseau optique comporte les étapes de :
sélectionner, au sein d'un premier ensemble d'identifiants de canaux de longueur d'onde représentant au moins un canal de longueur d'onde susceptible d'être alloué à ladite connexion entre un noeud capable de conversion et un noeud voisin amont, au moins un canal de longueur d'onde susceptible d'être alloué à la connexion aussi entre le noeud capable de conversion et un noeud voisin aval,
évaluer une condition de risque relative à un risque de blocage spectral de la connexion en aval du noeud capable de conversion, et
lorsque la condition de risque est valide, inclure dans un deuxième ensemble un identifiant de canal de longueur d'onde représentant un canal de longueur d'onde susceptible d'être alloué à la connexion entre ledit noeud capable de conversion et le noeud voisin aval et différent du premier ensemble d'identifiants. Application au protocole RSVP-TE dans un réseau GMPLS.

FIG_2

EP 2 141 843 A1

**Description**

L'invention se rapporte au domaine des réseaux de communication optiques utilisant le multiplexage en longueurs d'onde (WDM) et capables d'établir des connexions transparentes ou photoniques, notamment aux réseaux à plan de contrôle GMPLS.

Dans un réseau optique, réaliser la transmission d'un signal optique de manière transparente au niveau d'un noeud de commutation, c'est-à-dire sans conversion du signal de données vers le domaine électronique, permet de réduire la consommation de transpondeurs optiques. Il y a donc un avantage économique à réaliser des connexions transparentes lorsque cela est possible. Pour cela, il est nécessaire de disposer d'une méthode d'allocation de longueur d'onde qui permette de trouver un canal de longueur d'onde disponible sur le chemin de la connexion.

Dans le contexte des réseaux à plan de contrôle distribué de type Generalized Multi Protocol Label Switching (GMPLS), par exemple dans le document GMPLS Architectural Considérations for (Hybrid) Photonic Networks, Internet Engineering Task Force, CCAMP Working Group, Martin Vigoureux et al., Juin 2002, on connaît des méthodes d'allocation de longueur d'onde distribuées fondées sur l'échange de messages de signalisation. Dans une de ces méthodes, un noeud situé sur le chemin de la connexion (Label Switched Path, LSP) forme une offre d'allocation de longueur d'onde qui identifie le ou les canaux de longueur d'onde que le noeud propose d'allouer à la connexion compte tenu de sa connaissance locale des canaux disponibles. Cette offre d'allocation est transmise sous la forme d'un objet LABEL SET au noeud voisin aval, lequel la restreint éventuellement en fonction de sa connaissance locale des canaux disponibles avant de la passer au niveau voisin aval. Cette méthode permet au noeud d'extrémité aval de la connexion d'obtenir une offre d'allocation d'un ou plusieurs canaux disponibles parmi lesquels ce noeud sélectionne le ou les canaux à allouer. Toutefois, dans le cas où, en raison de l'occupation des canaux, l'offre devient vide au niveau d'un noeud intermédiaire qui n'est pas capable d'effectuer une conversion de longueur d'onde, le procédé d'allocation de longueur d'onde échoue et doit être répété (crank-back) en partant d'une autre offre initiale.

EP-A-1377108 décrit un procédé de segmentation d'une connexion photonique dans un réseau GMPLS. Lorsqu'un noeud capable d'effectuer une conversion de longueur d'onde détermine qu'une condition de segmentation est satisfaite, il sélectionne une longueur d'onde devant être utilisée sur un segment amont de la connexion, puis il transmet une offre d'allocation de longueur d'onde élargie à un noeud aval. Ainsi, l'allocation de longueur d'onde sur le segment amont précède l'allocation de longueur d'onde sur un segment aval de la connexion.

Selon un mode de réalisation, l'invention fournit un procédé de génération d'une offre d'allocation de longueur d'onde pour une connexion dans un réseau optique, comprenant les étapes consistant à :

sélectionner, au sein d'un premier ensemble d'identifiants de canaux de longueur d'onde représentant au moins un canal de longueur d'onde susceptible d'être alloué à ladite connexion entre un noeud capable de conversion et un noeud voisin amont, au moins un canal de longueur d'onde susceptible d'être alloué à ladite connexion aussi entre ledit noeud capable de conversion et un noeud voisin aval,

produire un deuxième ensemble d'identifiants de canaux de longueur d'onde destiné à être transmis audit noeud voisin aval, ledit deuxième ensemble d'identifiants de canaux de longueur d'onde représentant au moins un canal de longueur d'onde susceptible d'être alloué à ladite connexion entre ledit noeud capable de conversion et ledit noeud voisin aval, ledit deuxième ensemble comportant au moins un identifiant représentant ledit au moins un canal de longueur d'onde sélectionné à l'étape précédente,

évaluer une condition de risque relative à un risque de blocage spectral de la connexion en aval dudit noeud capable de conversion,

lorsque ladite condition de risque est valide, inclure dans ledit deuxième ensemble un ou plusieurs identifiants de canaux de longueur d'onde représentant un ou plusieurs canaux de longueur d'onde susceptibles d'être alloués à ladite connexion entre ledit noeud capable de conversion et ledit noeud voisin aval et différents du ou des canaux de longueur d'onde représentés par le premier ensemble d'identifiants.

Selon d'autres modes de réalisation avantageux, ce procédé peut présenter une ou plusieurs des caractéristiques additionnelles suivantes.

Selon un mode de réalisation préféré, la condition de risque représente un risque de blocage spectral de la connexion entre ledit noeud capable de conversion et un noeud aval situé sur un chemin de ladite connexion.

Avantageusement, la condition de risque de blocage spectral est évaluée en fonction du nombre de canaux sélectionnés à l'étape de sélection et du nombre de canaux disponibles ou indisponibles sur les liens du chemin de la connexion jusqu'audit noeud aval.

Selon un mode de réalisation particulier, la condition de risque de blocage spectral est évaluée en fonction du nombre de canaux extraits au niveau des noeuds entre ledit noeud capable de conversion et ledit noeud aval.

De préférence, le noeud aval est un autre noeud capable de conversion, notamment le premier noeud capable de conversion situé vers l'aval. Un tel mode de réalisation permet de traiter les risques de blocage spectral de la connexion par segments transparents successifs, ce qui restreint la zone du réseau sur lequel ces risques sont à chaque fois évalués et simplifie donc l'évaluation desdits risques. Alternativement, le risque de blocage spectral de la connexion peut être évalué entre ledit noeud capable de conversion et un noeud de destination de la connexion. Un tel mode de réalisation est notamment applicable au niveau du dernier noeud capable de conversion sur le chemin de la connexion.

Selon un mode de réalisation particulier, la condition de risque est évaluée en fonction d'informations d'état relatives aux liens situés un chemin de ladite connexion et collectées au moyen d'un protocole de routage à état des liens. De telles informations d'état comportent par exemple la bande passante disponible sur un lien, le nombre de canaux de longueurs d'onde disponibles sur un lien ou des informations permettant de déterminer ce nombre.

Selon un mode de réalisation particulier, le procédé comporte en outre les étapes consistant à recevoir un message de signalisation comportant ledit premier ensemble d'identifiants de canaux de longueur d'onde au niveau dudit noeud capable de conversion et à transmettre un message de signalisation comportant ledit deuxième ensemble d'identifiants de canaux de longueur d'onde depuis ledit noeud capable de conversion.

Selon un mode de réalisation particulier, la connexion est un chemin à commutation d'étiquette d'un réseau GMPLS. Selon un mode de réalisation particulier, les messages de signalisation sont conformes au protocole RSVP-TE. Selon un mode de réalisation particulier, les ensembles d'identifiants de canaux de longueur d'onde consistent en des objets LABEL SET ou UPSTREAM LABEL SET dudit protocole.

Selon un autre mode de réalisation, l'invention fournit également un programme d'ordinateur comportant des codes d'instruction aptes à être lus ou écrits sur un support et aptes à être exécutés par un ordinateur pour effectuer toutes les étapes du procédé précité.

Selon un autre mode de réalisation, l'invention fournit également un dispositif de commande pour un noeud de commutation optique capable de conversion, ledit dispositif de commande comportant des moyens de génération d'une offre d'allocation de longueur d'onde pour une connexion, lesdits moyens étant aptes à :

sélectionner, au sein d'un premier ensemble d'identifiants de canaux de longueur d'onde représentant au moins un canal de longueur d'onde susceptible d'être alloué à ladite connexion entre ledit noeud capable de conversion et un noeud voisin amont, au moins un canal de longueur d'onde susceptible d'être alloué à ladite connexion aussi entre ledit noeud capable de conversion et un noeud voisin aval,

produire un deuxième ensemble d'identifiants de canaux de longueur d'onde destiné à être transmis audit noeud voisin aval, ledit deuxième ensemble d'identifiants de canaux de longueur d'onde représentant au moins un canal de longueur d'onde susceptible d'être alloué à ladite connexion entre ledit noeud capable de conversion et ledit noeud voisin aval, ledit deuxième ensemble comportant au moins un identifiant représentant ledit au moins un canal de longueur d'onde sélectionné à l'étape précédente,

évaluer une condition de risque relative à un risque de blocage spectral de ladite connexion en aval dudit noeud capable de conversion, et

lorsque ladite condition de risque est valide, inclure dans ledit deuxième ensemble un identifiant de canal de longueur d'onde représentant un canal de longueur d'onde susceptible d'être alloué à ladite connexion entre ledit noeud capable de conversion et ledit noeud voisin aval et différent dudit au moins un canal de longueur d'onde représenté par le premier ensemble d'identifiants.

Selon d'autres modes de réalisation avantageux, ce dispositif de commande peut présenter une ou plusieurs des caractéristiques additionnelles suivantes :

- des moyens de signalisation aptes à recevoir un message de signalisation comportant ledit premier ensemble d'identifiants de canaux de longueur d'onde et à transmettre un message de signalisation comportant ledit deuxième ensemble d'identifiants de canaux de longueur d'onde.
- un stockage de données pour stocker des informations d'état relatives aux liens situés un chemin de ladite connexion, lesdits moyens de génération étant aptes à évaluer la condition de risque en fonction desdites informations d'état.
- des moyens de routage aptes à collecter lesdites informations d'état au moyen d'un protocole de routage à état des liens.

Selon un autre mode de réalisation, l'invention fournit également un noeud de commutation optique comportant :

un dispositif de commande précité,
des interfaces d'entrée optiques pour recevoir des canaux de longueur d'onde,
des interfaces de sortie optiques pour transmettre des canaux de longueur d'onde, des moyens de commutation transparents pour faire passer des canaux de longueur d'onde entre lesdites interfaces d'entrée optiques et lesdites interfaces de sortie optiques, et
des moyens de conversion pour générer, à partir d'un canal de longueur d'onde reçu sur une interface d'entrée, un canal de longueur d'onde ayant une longueur d'onde porteuse différente et portant sensiblement le même signal de données que le canal de longueur d'onde reçu.

Les termes « amont » et « aval » font référence au sens de transmission d'une offre d'allocation de longueur d'onde, par exemple dans des messages de contrôle, et sont indépendants de toute référence au sens des signaux optiques devant être transportés par la connexion.

Par blocage spectral, on entend l'impossibilité pour un noeud du chemin de connexion de proposer un canal de longueur d'onde susceptible d'être alloué à la connexion, compte tenu par exemple de l'indisponibilité des canaux de longueur d'onde au niveau des interfaces du noeud et/ou de l'incapacité du noeud à effectuer une conversion de longueur d'onde qui serait nécessaire pour atteindre un canal disponible.

Une idée à la base de l'invention est de chercher à réduire les situations de blocage d'une offre d'allocation de longueur d'onde pour une connexion, à savoir les risques de voir l'offre d'allocation devenir vide au niveau d'un noeud intermédiaire en raison de la contention pour les canaux de longueurs d'onde. Certains aspects de l'invention découlent de l'idée de générer localement une offre d'allocation de longueur d'onde qui supporte simultanément plusieurs options, à savoir en offrant vers l'aval à la fois un ou plusieurs canaux vérifiant une condition de continuité de longueur d'onde, supportant ainsi l'option consistant à établir la connexion ou un segment de la connexion de manière transparente au niveau d'un noeud, et un ou plusieurs canaux ne vérifiant pas la condition de continuité de longueur d'onde, supportant ainsi l'option consistant à effectuer une conversion du signal au niveau dudit noeud. Certains aspects de l'invention découlent de l'idée de supporter la deuxième option au niveau des noeuds où elle est la plus pertinente et de privilégier la première option par défaut.

L'invention sera mieux comprise, et d'autres buts, détails, caractéristiques et avantages de celle-ci apparaîtront plus clairement au cours de la description suivante de plusieurs modes de réalisation particuliers de l'invention, donnés uniquement à titre illustratif et non limitatif, en référence aux dessins annexés. Sur ces dessins :

La figure 1 est une représentation schématique fonctionnelle d'un réseau optique hybride dans lequel une connexion peut être établie.

La figure 2 est un diagramme représentant des messages de signalisation pouvant être utilisés dans le réseau de la figure 1 pour établir une connexion partiellement transparente.

La figure 3 est une représentation schématique fonctionnelle d'un mode de réalisation de contrôleur de noeud pouvant être utilisé dans le réseau de la figure 1.

La figure 4 est un diagramme d'étape représentant un procédé pouvant être mis en oeuvre par le contrôleur de noeud de la figure 3.

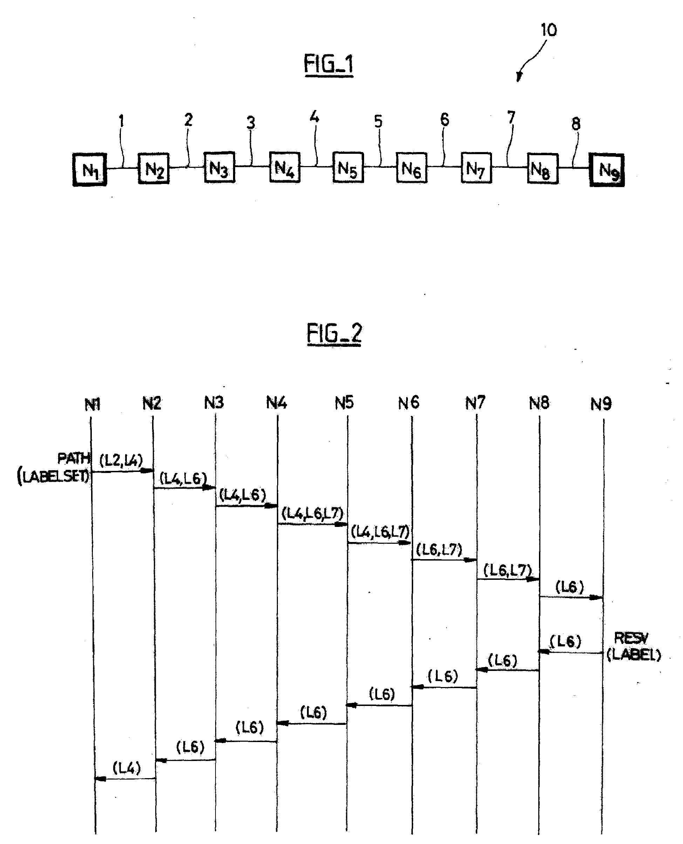

En référence à la figure 1, un réseau optique hybride 10 très schématiquement représenté comporte des noeuds de commutation N1 à N9, par exemple du type multiplexeur optique reconfigurable à insertion-extraction (ROADM) ou autre, reliés par des liens optiques 1 à 8, par exemple des fibres optiques. La topologie du réseau représenté, le nombre, l'agencement et le degré de connectivité des noeuds sont choisis arbitrairement pour les besoins de l'illustration. On entend par réseau optique hybride un système de communication optique dont les noeuds comportent à la fois des ressources pour commuter les signaux dans le domaine optique i.e. effectuer une commutation transparente, et des ressources pour régénérer les signaux via le domaine électronique (conversion O/E/O). En général, il est souhaitable d'exploiter le réseau de manière à maximiser l'utilisation de la commutation transparente des signaux. En particulier, les ressources de régénération des signaux peuvent être prévues en quantité limitée, pour diminuer le coût d'équipement du réseau, ce qui exclut de régénérer en totalité le trafic transporté à chaque noeud.

Pour contrôler le réseau 10, une pile protocolaire GMPLS est déployée au niveau de chaque noeud. Les noeuds sont donc capables d'établir des connexions sous la forme de chemins à commutation d'étiquette (LSP pour Label-switched path). En particulier, des étiquettes généralisées de type longueur d'onde (LSP Encoding Type = Lambda) sont utilisées pour signaliser des connexions photoniques à la granularité d'un canal de longueur d'onde.

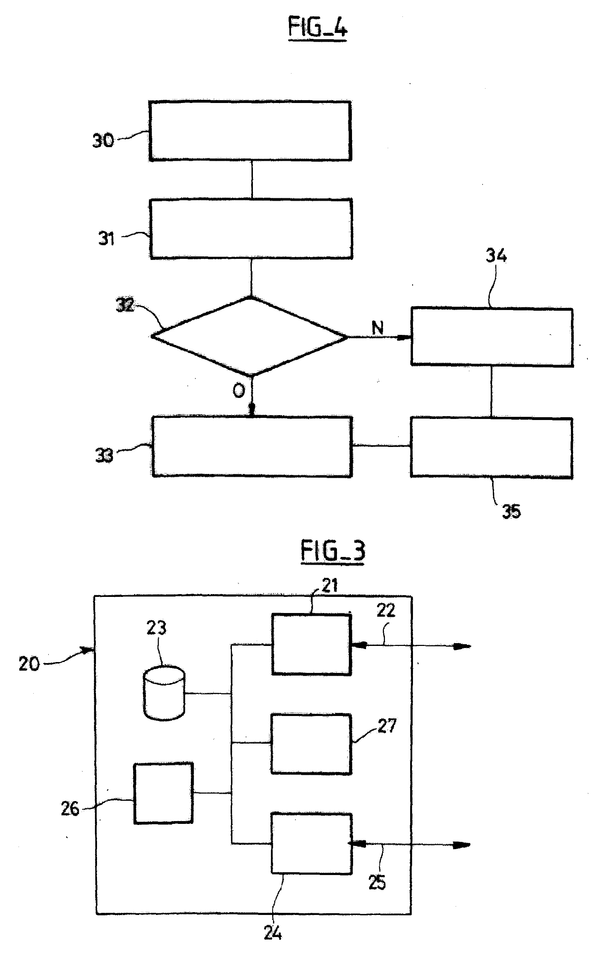

La figure 3 est une représentation fonctionnelle d'un contrôleur de noeud 20 utilisable dans les noeuds N1 à N9. Un module de routage 21 met en oeuvre un protocole de routage à état des liens, par exemple OSPF-TE ou IS-IS-TE, et échange des messages de routage 22 avec les autres noeuds conformément à ce protocole, de manière à disséminer des informations de topologie, de connectivité et de capacité des liens du réseau, selon la technique connue. Le contrôleur de noeud 20 comporte une base de données d'ingénierie de trafic 23 alimentée par le module de routage 21 et dans laquelle ces informations sont stockées et mises à jour de manière dynamique.

Un module de signalisation 24 met en oeuvre un protocole de signalisation, par exemple RSVP-TE, et échange des messages de signalisation 25 avec les autres noeuds conformément à ce protocole, de manière à gérer les connexions traversant le noeud, notamment les opérations d'établissement, de modification ou de suppression d'une connexion. La base de données d'ingénierie de trafic 23 est mise à jour en fonction des connexions établies à travers le noeud, sous le contrôle d'un module de contrôle d'admission 26, de manière à enregistrer de manière dynamique l'état d'occupation des interfaces optiques du noeud.

Il existe plusieurs possibilités pour réaliser le transport des messages de contrôle, notamment les messages de routage 22 et messages de signalisation 25 dans le réseau 10. Par exemple, ces messages peuvent être transportés sur les mêmes liens que le trafic de données (« in-fiber ») ou sur des liens dédiés distincts, sur les mêmes canaux (« in-band ») ou sur des canaux dédiés distincts.

Ainsi, en fonction des informations obtenues à travers le module de signalisation 24 et du module de routage 21, la base de données d'ingénierie de trafic 23 maintient en permanence des informations détaillées sur l'état des liens adjacents au noeud, i.e. les liens connectés à ses interfaces optiques entrantes et sortantes. Ces informations détaillées comportent notamment l'état de disponibilité de chaque canal de longueur d'onde sur ces liens. En ce qui concerne les liens non adjacents, la base de données d'ingénierie de trafic 23 maintient des informations d'état moins détaillées car le protocole de routage dissémine des informations agrégées afin de limiter le volume des échanges. Ces informations agrégées comportent par exemple la bande passante disponible sur ces liens, mais non l'état de disponibilité de chaque canal de longueur d'onde. Bien qu'on ait représenté la base de données 23 de manière unitaire par mesure de simplicité, il est possible de structurer ces données de différentes manières, notamment sous la forme de plusieurs structures de données interconnectées.

La notion de disponibilité d'un canal de longueur d'onde peut être appliquée de manière absolue ou de manière relative. Dans un mode de réalisation, des niveaux de priorité sont alloués aux connexions et sont utilisés pour permettre ou interdire la réaffectation des ressources e.g. des canaux de longueur d'onde, d'une connexion à une autre. Dans ce cas, un canal de longueur d'onde occupé par une connexion est considéré disponible pour l'établissement d'une connexion de priorité supérieure mais indisponible pour l'établissement d'une connexion de priorité inférieure ou égale.

Le contrôleur de noeud 20 compte aussi un module de gestion des étiquettes 27 dont le fonctionnement sera décrit plus bas.

En ce qui concerne l'architecture optique des noeuds hybrides N1 à N9, de nombreuses possibilités existent qui n'ont pas besoin d'être décrites ici. De nombreux types de composants peuvent être employés, par exemple des multiplexeurs/démultiplexeurs de longueurs d'onde, des matrices de commutation optique, des filtres fixes ou accordables, des transmetteurs optiques fixes ou accordables, des bloqueurs de longueurs d'ondes, des commutateurs à sélection de longueur d'onde (wavelength selective switch), etc.

Sur la figure 1, on considère le réseau dans un état donné, dans lequel du trafic est déjà transporté sur au moins certains des liens 1 à 8. Pour procéder à l'établissement d'un nouveau LSP de type Lambda, par exemple avec un débit égal au débit d'un canal de longueur d'onde, entre le noeud N1 et le noeud N9, il est souhaité de trouver un canal de longueur d'onde qui puisse être commuté de manière transparente tout le long du chemin de la nouvelle connexion ou des canaux de longueur d'onde pouvant être utilisés sur des segments successifs dudit chemin en effectuant une ou plusieurs opérations de conversion. Pour déterminer ce ou ces canaux, et donc les étiquettes généralisées correspondantes, les noeuds mettent en oeuvre un procédé d'allocation de longueur d'onde distribué qui va maintenant être décrit.

Dans le mode de réalisation décrit ici, le procédé repose sur l'emploi de l'objet LABEL SET conformément aux principes décrits dans la RFC 3471 de l'IETF. Le noeud d'extrémité amont de la connexion à établir, à savoir ici N1, génère une requête de connexion sous la forme d'un message PATH contenant, en autres objets, un objet LABEL SET contenant une liste d'identifiants de canaux qui désigne le ou les canaux de longueur d'onde pouvant être utilisés pour le prochain saut vers l'aval. Ce message PATH est transmis de noeud en noeud vers le noeud d'extrémité aval, à savoir ici N9. Au cours de cette transmission, le contenu du message PATH peut être modifié par chaque noeud successif. En particulier, l'objet LABEL SET est traité par le module de gestion des étiquettes 27 de manière à produire, à partir du LABEL SET reçu depuis le noeud voisin amont, un LABEL SET actualisé destiné à être transmis au noeud voisin aval. Lorsque le noeud d'extrémité aval reçoit le message PATH, il sélectionne un canal parmi ceux identifiés dans le LABEL SET et le copie dans un objet LABEL qu'il retransmet vers l'amont dans un message RESV. Le message RESV est transmis de noeud en noeud vers le noeud d'extrémité amont pour procéder, saut par saut, à l'allocation des longueurs d'onde. Au cours de cette transmission, chaque noeud successif peut modifier l'objet LABEL en se restreignant aux canaux proposés dans le LABEL SET qu'il a reçu.

Dans un mode de réalisation, le module de gestion des étiquettes 27 des noeuds met en oeuvre le procédé représenté sur la figure 4.

A l'étape 30, le module de gestion des étiquettes 27 lit le contenu du LABEL SET qui a été reçu depuis le noeud voisin amont pour identifier les canaux de longueur d'onde désignés dans ce LABEL SET.

A l'étape 31, le module de gestion des étiquettes 27 consulte la base de données 23 pour déterminer quels canaux, parmi les canaux désignés dans le LABEL SET reçu, sont disponibles sur le lien adjacent aval, c'est-à-dire disponibles pour porter la nouvelle connexion en direction du noeud voisin aval. Ces canaux disponibles, au moins certains d'entre eux, de préférence tous, sont sélectionnés en vue d'être inclus dans le LABEL SET devant être transmis au noeud voisin aval.

A l'étape 31, s'il s'avère qu'aucun des canaux désignés dans le LABEL SET reçu n'est disponible sur le ou les liens adjacents aval, le procédé peut se poursuivre conformément aux spécifications du document GMPLS Architectural Considerations for (Hybrid) Photonic Networks cité plus haut. Dans ce cas :

- si le noeud comporte des moyens matériels pour effectuer une conversion de longueur d'onde à partir d'un ou plusieurs des canaux désignés dans le LABEL SET reçu, le module de gestion des étiquettes 27 peut proposer un nouveau LABEL SET désignant le ou les canaux de longueur d'onde accessibles via cette conversion et disponibles pour porter la nouvelle connexion en direction du noeud voisin aval.
- si le noeud ne comporte pas de moyens matériels pour effectuer une conversion de longueur d'onde à partir d'un ou plusieurs des canaux désignés dans le LABEL SET reçu, la situation est celle d'un blocage spectral. Dans ce cas, le module de gestion des étiquettes 27 peut en informer le module de signalisation 24 afin qu'un message d'erreur PathErr soit envoyé vers l'amont, éventuellement en indiquant un ou plusieurs canaux de longueur d'onde acceptables dans un objet

Acceptable Label Set, pour recommencer le procédé (crank back).

A l'étape 31, si au moins un canal disponible a été sélectionné, le procédé se poursuit par l'étape 32 qui est une étape d'évaluation de risque tendant à évaluer, compte-tenu du ou des canaux sélectionnés, les risques d'occurrence d'une situation de blocage spectral en aval du noeud. Dans un mode de réalisation, l'étape 32 comporte l'évaluation d'une ou plusieurs variables booléennes représentant l'existence ou l'absence d'un risque de blocage spectral. Dans un autre mode de réalisation, l'étape 32 comporte la détermination quantitative d'un risque ou d'une probabilité de blocage spectral et la comparaison de cette probabilité à un seuil de décision. Des évaluations booléennes et quantitatives peuvent aussi être combinées de diverses manières. Des exemples seront donnés plus bas. Toutes ces possibilités sont représentées schématiquement sur la figure 4 par une étape de test résultant, soit en un Oui (condition de risque valide) conduisant à l'étape 33, soit en un Non (condition de risque invalide) conduisant à l'étape 34.

A l'étape 34, le module de gestion des étiquettes 27 produit un nouvel objet LABEL SET comportant uniquement les identifiants des canaux sélectionnés à l'étape 31.

En revanche, à l'étape 33, le module de gestion des étiquettes 27 consulte la base de données d'ingénierie de trafic 23 pour déterminer s'il existe un ou plusieurs canaux disponibles sur le ou les liens adjacents aval et qui n'étaient pas désignés dans le LABEL SET reçu, en d'autres termes des canaux disponibles dont l'utilisation supposerait d'effectuer une conversion de longueur d'onde au niveau du noeud. Pour chacun de ces canaux disponibles impliquant une conversion de longueur d'onde, le module de gestion des étiquettes 27 détermine si le noeud dispose des capacités matérielles pour effectuer la conversion de longueur d'onde correspondante depuis au moins un des canaux désignés dans le LABEL SET reçu. Dans l'affirmative, le module de gestion des étiquettes 27 sélectionne ce canal comme étant approprié pour augmenter le LABEL SET devant être transmis en aval. Puis le module de gestion des étiquettes 27 produit un nouvel objet LABEL SET comportant les identifiants des canaux sélectionnés à l'étape 31 et les identifiants des canaux sélectionnés à l'étape 33. En variante, le nouvel objet LABEL SET peut comprendre un sous-ensemble de tous ces canaux sélectionnés, par exemple pour limiter le volume de l'objet.

Enfin, à l'étape 35, le nouvel objet LABEL SET est passé au module de signalisation pour être transmis au noeud voisin aval dans le message PATH.

Les étapes 32 et 33 n'ont pas de résultat significatif pour un noeud n'ayant pas la capacité matérielle d'effectuer une conversion de longueur d'onde, c'est-à-dire un noeud uniquement capable d'effectuer une commutation transparente du signal optique. Dans un mode de réalisation spécifiquement adapté aux noeuds de ce type, le module de gestion des étiquettes 27 peut avoir un fonctionnement simplifié en sautant directement de l'étape 31 à l'étape 34.

On décrit maintenant plusieurs méthodes convenant pour l'étape 32.

Première Méthode

Dans un mode de réalisation, l'étape d'évaluation de risque consiste à déterminer s'il existe un risque de contention sur la ou les longueurs d'onde sélectionnées à l'étape 31 entre le noeud courant et un noeud aval situé sur le chemin de la connexion, notamment le premier noeud aval ayant des capacités matérielles de conversion de longueur d'onde ou le noeud d'extrémité aval.

Par exemple, une base de donnée d'état des liens (Link State Database) qui est un sous-ensemble de la base de données 23 maintenu par OSPF-TE peut être consultée pour déterminer le nombre de saut jusqu'à ce noeud aval et la charge des liens correspondants. Par exemple, le nombre de canaux disponibles sur un lien non adjacent au noeud courant peut être déterminé à partir de l'information agrégée obtenue via les messages Link State Advertisment du protocole OSPF-TE. Pour cela, il est possible par exemple de calculer le rapport entre un paramètre « bande passante non réservée » (unreserved bandwidth) du lien et le débit de données d'un canal, qui est disponible par exemple dans le champ « Max LSP Bandwidth » de l'objet « Interface Switching Capability Descriptor » du lien ou qui peut être obtenu par ailleurs.

Si le premier noeud aval ayant des capacités matérielles de conversion de longueur d'onde ou le noeud d'extrémité aval correspond au noeud voisin aval, le risque de contention est normalement inexistant puisqu'il a été éliminé à l'étape 31. La condition de risque n'est donc pas satisfaite.

Si le premier noeud aval ayant des capacités matérielles de conversion de longueur d'onde ou le noeud d'extrémité aval se situe à au moins deux sauts, la condition de risque peut être évaluée sous une hypothèse pessimiste, à savoir en supposant que les ensembles de canaux indisponibles sur chacun des liens successifs sont strictement disjoints (hypothèse d'occupation spectrale maximale du trafic existant). Dans ce cas, une approche consiste à calculer la somme des nombres de canaux indisponibles sur chacun des liens successifs à partir du deuxième saut et jusqu'au noeud aval, soit NI, et à comparer cette somme au nombre de canaux sélectionnés à l'étape 31, soit NS. Si NI<NS, le risque de contention peut être estimé négligeable et la condition de risque n'est donc pas satisfaite. Si NI≥NS, la condition de risque est satisfaite.

<u>Deuxième Méthode</u>

Selon un autre mode de réalisation, une probabilité de trouver un canal de longueur d'onde disponible jusqu'au noeud aval au sein des canaux sélectionnés à l'étape 31 est estimée quantitativement et comparée à un seuil de décision fixé. Si la probabilité est inférieure au seuil, la condition de risque est satisfaite. Si la probabilité est supérieure au seuil, la condition de risque n'est pas satisfaite.

Une approche possible pour estimer cette probabilité est donnée ci-dessous.

On appelle W le nombre total de canaux de longueur d'onde susceptibles d'être transportés sur chaque lien, qui est supposé être uniforme sur tout le chemin de connexion.

On appelle $n_i$ le nombre de canaux de longueur d'onde disponibles sur le lien i.

On appelle L l'ensemble des liens constituant un parcours P.

On appelle $P(W,(n_i)_{i \in L}, N)$ la probabilité de trouver au moins canal de longueur d'onde disponible sur l'ensemble du parcours P parmi les N derniers canaux de longueur d'onde.

On appelle $P_{\lambda_k}(W,(n_i)_{i \in L})$ la probabilité que le i-ème canal de longueur d'onde soit disponible sur l'ensemble du parcours P.

Si

$$\exists i \in L / n_i = 0 \, , \; P\left(W,\left(n_i\right)_{i \in L}, N\right) = 0 \, .$$

Sinon,

$$P\left(W,\left(n_i\right)_{i \in L}, N\right) = \sum_{k=0}^{N-1} P_{\lambda_{W-k}}\left(W,\left(n_i\right)_{i \in L}\right)\left(1 - P\left(W-1,\left(n_i-1\right)_{i \in L}, k\right)\right) \, .$$

Sous l'hypothèse que les canaux de longueur d'onde ne sont pas distinguables : $\forall k \in W, P_{\lambda_k}(W,(n_i)_{i \in L}) = P_\lambda(W,(n_i)_{i \in L})$. D'où :

$$P\left(W,\left(n_i\right)_{i \in L}, N\right) = P_\lambda\left(W,\left(n_i\right)_{i \in L}\right)\sum_{k=0}^{N-1}\left(1 - P\left(W-1,\left(n_i-1\right)_{i \in L}, k\right)\right) \qquad (1)$$

avec

$$P_\lambda\left(W,\left(n_i\right)_{i \in L}\right) = \prod_{i \in L} \frac{n_i}{W} \, .$$

La probabilité de trouver au moins une longueur d'onde transparente sur le chemin P est égale à $P(W,(n_i)_{i \in L}, W)$, qui peut donc être calculée en appliquant la formule (1) récursivement.

Les méthodes d'évaluation du risque de blocage données ci-dessus ne sont pas exhaustives. D'autres méthodes d'évaluation peuvent être conçues par l'homme du métier. Par ailleurs, d'autres paramètres que ceux utilisés ci-dessus peuvent être pris en compte dans ces méthodes. Par exemple, pour donner une estimation statistique du nombre de canaux distincts occupés par le trafic existant qui soit plus réaliste que l'hypothèse pessimiste de la première méthode, des paramètres qui peuvent être pris en compte sont notamment le degré de connectivité des noeuds, le nombre de sauts effectués en transparence par les connexions déjà établies dans le réseau, ou le nombre de connexions qui se terminent à chaque noeud le long du chemin de la nouvelle connexion.

Exemple

En référence aux figures 1 et 2, on va maintenant décrire un exemple d'une allocation de longueur d'onde effectuée en utilisant le procédé de la figure 4. Les hypothèses sont les suivantes :

Le réseau supporte W=8 canaux de longueur d'onde, désignés respectivement par les étiquettes L1 à L8.

Le trafic existant occupe tous les canaux sauf :

- Sur le lien 1 : L2 et L4
- Sur le lien 2 : L4 et L6
- Sur le lien 3 : L4 et L6
- Sur le lien 4 : L4, L6 et L7
- Sur le lien 5 : L4, L6 et L7
- Sur le lien 6 : L6 et L7
- Sur le lien 7 : L6 et L7
- Sur le lien 8 : L6 et L8

Les noeuds N2, N4 et N8 ont la capacité matérielle d'effectuer toutes les conversions de longueur d'onde des canaux disponibles en amont vers les canaux disponibles en aval. Les noeuds N3, N5, N6 et N7 n'ont pas la capacité matérielle d'effectuer une conversion de longueur d'onde. Par exemple, une telle absence de capacité matérielle peut résulter de la conception du noeud, s'il n'est pas équipé de moyens de conversion, e.g. récepteurs et transmetteurs optiques, ou de l'indisponibilité des moyens installés, par exemple s'ils sont déjà tous occupés par le trafic existant.

Sur la figure 2, les flèches allant du noeud N1 au noeud N9 représentent un message PATH portant un objet LABEL SET dont le contenu est marqué entre parenthèses. Les flèches allant du noeud N9 au noeud N1 représentent un message RESV portant un objet LABEL dont le contenu est marqué entre parenthèses.

L'objet LABEL SET est traité par les noeuds de la manière suivante :

Le noeud N1 propose tous les canaux disponibles sur son interface sortante.

Le noeud N2 sélectionne le canal L4 à l'étape 31. Il détermine que la condition de risque est satisfaite, par exemple par la première méthode. Plus précisément, le premier noeud aval capable de conversion est le noeud N4, et on a Nl=nombres de canaux indisponibles sur le lien 3=8-2=6. Or NS=1. A l'étape 33, le noeud N2 sélectionne le canal L6 puisqu'il est accessible via une conversion et il propose donc L4 et L6 au noeud N3.

Le noeud N3 sélectionne L4 et L6 à l'étape 31 et transmet donc le LABEL SET inchangé.

Le noeud N4 sélectionne L4 et L6 à l'étape 31 et, après avoir déterminé comme précédemment que la condition de risque est valide, il augmente le LABEL SET avec le canal L7 accessible via une conversion.

Le noeud N5 sélectionne L4, L6 et L7 à l'étape 31 et transmet donc le LABEL SET inchangé. Le noeud N6 sélectionne L6 et L7 à l'étape 31 puisque L4 est indisponible sur son interface sortante. Le noeud N7 sélectionne L6 et L7 à l'étape 31 et transmet donc le LABEL SET inchangé.

Le noeud N8 sélectionne L6 à l'étape 31 et, après avoir déterminé que la condition de risque est invalide puisque le prochain noeud est le noeud de destination, il ne propose que le canal L6 dans le LABEL SET, bien qu'il soit capable d'atteindre aussi le canal L8 via une conversion.

Le noeud N9 alloue donc le canal L6 sur le lien amont. Les noeuds N8 à N3 font de même. En particulier, les noeuds N8 et N4, qui auraient d'autres possibilités, à savoir L7 et L4 respectivement, appliquent une règle de sélection qui privilégie la commutation transparente lorsqu'elle est possible.

Enfin, le noeud N2 qui ne dispose d'aucune solution transparente sur son interface amont alloue l'un des canaux à partir desquels il est capable de faire une conversion vers le canal L6, par exemple L4.

Sur cet exemple, qui peut être comparé à ceux donnés à la section 7.3 du document GMPLS Architectural Considerations for (Hybrid) Photonic Networks cité plus haut, l'allocation de longueur d'onde le long du chemin N1 à N9 est effectuée en un seul passage des messages de signalisation et aboutit à un nombre de conversions de longueur d'onde qui est ici le minimum possible. Par ailleurs, le volume des informations de signalisation échangées entre les noeuds est comparativement très inférieur à la troisième méthode du document précité.

Sur la figure 3, le module de gestion des étiquettes 27 effectue l'évaluation du risque de blocage spectral à l'aide de données de la base de données d'ingénierie de trafic 23 du noeud. En variante, des données stockées dans un dispositif extérieur au noeud, par exemple dans un élément de calcul de chemin PCE pourraient aussi être utilisées.

Le terme conversion de longueur d'onde ou simplement conversion désigne la modification de la longueur d'onde porteuse utilisée pour porter un signal de données. Pour la conversion de longueur d'onde d'un signal entrant, les étapes suivantes peuvent être suivies : réception du signal optique entrant, démodulation électronique du signal de données transporté, et utilisation du signal de données pour moduler un signal optique à une longueur d'onde différente. Dans une mise en oeuvre avantageuse, les composants permettant de réaliser une conversion de longueur d'onde via le domaine électronique, notamment les transpondeurs optique-électronique et électronique-optique, réalisent conjointement une régénération du signal pour rétablir sa qualité (par exemple régénération 3R : resynchronisation, remise en forme et réamplification). Dans un mode de réalisation particulier, une partie des données démodulées, par exemple correspondant à des données de contrôle, peut être modifiée au cours de l'opération de conversion.

Alternativement, une conversion de longueur d'onde peut être effectuée par des technologies purement optiques, qui permettent de générer un signal optique sortant à une longueur d'onde différente du signal entrant sans nécessiter de démodulation du signal entrant dans le domaine électronique.

Dans le cas d'utilisation de l'objet LABEL SET, le sens de transmission de l'offre d'allocation correspond au sens de transmission des données dans la connexion. Toutefois cela n'est pas obligatoire. Par exemple, le procédé de la figure 4 peut être facilement adapté pour traiter un objet UPSTREAM LABEL SET, qui correspond à une offre d'allocation pour la direction montante d'un LSP bidirectionnel.

Les modes de réalisation décrits ci-dessus concernent des méthodes d'allocation de longueur d'onde distribuées mises en oeuvre dans un réseau supportant une pile protocolaire GMPLS. Toutefois, des méthodes analogues peuvent être mises en oeuvre avec d'autres piles protocolaires. Indépendamment des procédés et protocoles utilisés pour transporter les informations de contrôle dans le réseau, des méthodes d'allocation de longueur d'onde dans lesquelles une offre d'allocation circule de noeud en noeud en étant mise à jour en fonction des informations disponibles localement sont notamment utilisables dans tout réseau optique où l'information détaillée quant à l'état d'occupation de chaque lien, notamment l'identité des canaux libres, n'est disponible qu'à un niveau local.

Certains des éléments représentés, notamment les unités de commande et autres modules, peuvent être réalisés sous différentes formes, de manière unitaire ou distribuée, au moyen de composants matériels et/ou logiciels. Des composants matériels utilisables sont les circuits intégrés spécifiques ASIC, les réseaux logiques programmables FPGA ou les microprocesseurs. Des composants logiciels peuvent être écrits dans différents langages de programmation, par exemple C, C++, Java ou VHDL. Cette liste n'est pas exhaustive.

Bien que l'invention ait été décrite en liaison avec plusieurs modes de réalisation particuliers, il est bien évident qu'elle n'y est nullement limitée et qu'elle comprend tous les équivalents techniques des moyens décrits ainsi que leurs combinaisons si celles-ci entrent dans le cadre de l'invention.

L'usage du verbe « comporter », « comprendre » ou « inclure » et de ses formes conjuguées n'exclut pas la présence d'autres éléments ou d'autres étapes que ceux énoncés dans une revendication. L'usage de l'article indéfini « un » ou « une » pour un élément ou une étape n'exclut pas, sauf mention contraire, la présence d'une pluralité de tels éléments ou étapes. Plusieurs moyens ou modules peuvent être représentés par un même élément matériel.

Dans les revendications, tout signe de référence entre parenthèses ne saurait être interprété comme une limitation de la revendication.

**Revendications**

**1.** Procédé de génération d'une offre d'allocation de longueur d'onde pour une connexion dans un réseau optique (10), comprenant les étapes consistant â :

recevoir au niveau d'un noeud capable de conversion (N4) un premier message de signalisation comportant un premier ensemble d'identifiants de canaux de longueur d'onde, ledit premier ensemble d'identifiants de canaux de longueur d'onde représentant au moins un canal de longueur d'onde susceptible d'être alloué à ladite connexion entre ledit noeud capable de conversion et un noeud voisin amont (N3), sélectionner (31), au sein dudit premier ensemble d'identifiants de canaux de longueur d'onde au moins un canal de longueur d'onde susceptible d'être alloué à ladite connexion aussi entre ledit noeud capable de conversion et un noeud voisin aval (N5),

produire (35) un deuxième ensemble d'identifiants de canaux de longueur d'onde destiné à être transmis audit noeud voisin aval, ledit deuxième ensemble d'identifiants de canaux de longueur d'onde représentant au moins un canal de longueur d'onde susceptible d'être alloué à ladite connexion entre ledit noeud capable de conversion et ledit noeud voisin aval, ledit deuxième ensemble comportant au moins un identifiant représentant ledit au moins un canal de longueur d'onde sélectionné à l'étape précédente,

évaluer (32) une condition de risque relative à un risque de blocage spectral de la connexion en aval dudit noeud capable de conversion,

lorsque ladite condition de risque est valide, inclure (33) dans ledit deuxième ensemble un identifiant de canal de longueur d'onde représentant un canal de longueur d'onde susceptible d'être alloué à ladite connexion entre ledit noeud capable de conversion et ledit noeud voisin aval et différent dudit au moins un canal de longueur d'onde représenté par le premier ensemble d'identifiants,

transmettre un deuxième message de signalisation comportant ledit deuxième ensemble d'identifiants de canaux de longueur d'onde depuis ledit noeud capable de conversion au noeud voisin aval,

recevoir au niveau dudit noeud capable de conversion (N4) un troisième message de signalisation comportant un identifiant de canal de longueur d'onde représentant un canal de longueur d'onde alloué à ladite connexion entre ledit noeud capable de conversion et ledit noeud voisin aval (N5),

**caractérisé par le fait que** si ledit canal de longueur d'onde alloué à la connexion entre ledit noeud capable de conversion et ledit noeud voisin aval (N5) fait partie dudit premier ensemble d'identifiants de canaux de longueur d'onde, ledit noeud capable de conversion transmet un quatrième message de signalisation au noeud voisin amont (N3) pour allouer ledit canal de longueur d'onde à la connexion également entre ledit noeud capable de conversion et ledit noeud voisin amont.

2. Procédé selon la revendication 1, **caractérisé par le fait que** ladite condition de risque représente un risque de blocage spectral de la connexion entre ledit noeud capable de conversion (N2) et un noeud aval (N4) situé sur un chemin de ladite connexion.

3. Procédé selon la revendication 2, **caractérisé par le fait que** la condition de risque de blocage spectral est évaluée en fonction du nombre de canaux sélectionnés à l'étape de sélection et du nombre de canaux disponibles sur les liens (2, 3) du chemin de la connexion jusqu'audit noeud aval.

4. Procédé selon la revendication 3, **caractérisé par le fait que** la condition de risque de blocage spectral est évaluée en fonction du nombre de canaux extraits au niveau des noeuds entre ledit noeud capable de conversion et ledit noeud aval.

5. Procédé selon l'une des revendications 2 à 4, **caractérisé par le fait que** ledit noeud aval est un autre noeud capable de conversion

6. Procédé selon l'une des revendications 2 à 4, **caractérisé par le fait que** ledit noeud aval est un noeud de destination de la connexion.

7. Procédé selon l'une des revendications 1 à 6, **caractérisé par le fait que** la condition de risque est évaluée en fonction d'informations d'état relatives aux liens (2, 3) situés un chemin de ladite connexion et collectées au moyen d'un protocole de routage à état des liens.

8. Procédé selon l'une des revendications 1 à 7, **caractérisé par le fait que** la connexion est un chemin à commutation d'étiquette d'un réseau GMPLS, les messages de signalisation étant conformes au protocole RSVP-TE, lesdits ensembles d'identifiants de canaux de longueur d'onde consistant en des objets LABEL SET ou UPSTREAM LABEL SET dudit protocole.

9. Programme d'ordinateur comportant des codes d'instruction aptes à être lus ou écrits sur un support et aptes à être exécutés par un ordinateur pour effectuer toutes les étapes du procédé selon l'une des revendications 1 à 8.

10. Dispositif de commande (20) pour un noeud de commutation optique capable de conversion, ledit dispositif de commande comportant des moyens de génération d'une offre d'allocation de longueur d'onde pour une connexion, lesdits moyens (27) étant aptes à :

sélectionner (31), au sein d'un premier ensemble d'identifiants de canaux de longueur d'onde représentant au moins un canal de longueur d'onde susceptible d'être alloué à ladite connexion entre ledit noeud capable de conversion et un noeud voisin amont, au moins un canal de longueur d'onde susceptible d'être alloué à ladite connexion aussi entre ledit noeud capable de conversion et un noeud voisin aval,

produire (35) un deuxième ensemble d'identifiants de canaux de longueur d'onde destiné à être transmis audit noeud voisin aval, ledit deuxième ensemble d'identifiants de canaux de longueur d'onde représentant au moins un canal de longueur d'onde susceptible d'être alloué à ladite connexion entre ledit noeud capable de conversion et ledit noeud voisin aval, ledit deuxième ensemble comportant au moins un identifiant représentant ledit au moins un canal de longueur d'onde sélectionné à l'étape précédente,

évaluer (32) une condition de risque relative à un risque de blocage de ladite connexion en aval dudit noeud capable de conversion, et

lorsque ladite condition de risque est valide, inclure (33) dans ledit deuxième ensemble un identifiant de canal de longueur d'onde représentant un canal de longueur d'onde susceptible d'être alloué à ladite connexion entre ledit noeud capable de conversion et ledit noeud voisin aval et différent dudit au moins un canal de longueur d'onde représenté par le premier ensemble d'identifiants,

ledit dispositif de commande comportant des moyens de signalisation (24) aptes à :

recevoir un premier message de signalisation comportant ledit premier ensemble d'identifiants de canaux de longueur d'onde,

transmettre un deuxième message de signalisation comportant ledit deuxième ensemble d'identifiants de canaux de longueur d'onde,

recevoir un troisième message de signalisation comportant un identifiant de canal de

longueur d'onde représentant un canal de longueur d'onde alloué à ladite connexion entre ledit noeud capable de conversion et ledit noeud voisin aval (N5), et

si ledit canal de longueur d'onde alloué à la connexion entre ledit noeud capable de conversion et ledit noeud voisin aval (N5) fait partie dudit premier ensemble d'identifiants de canaux de longueur d'onde, transmettre un quatrième message de signalisation pour allouer ledit canal de longueur d'onde à la connexion également entre ledit noeud capable de conversion et ledit noeud voisin amont (N3).

**11.** Dispositif de commande selon la revendication 10, **caractérisé par le fait qu'**il comporte un stockage de données (23) pour stocker des informations d'état relatives aux liens situés un chemin de ladite connexion, lesdits moyens de génération étant aptes à évaluer la condition de risque en fonction desdites informations d'état.

**12.** Dispositif de commande selon la revendication 11, **caractérisé par le fait qu'**il comporte des moyens de routage (21) aptes à collecter lesdites informations d'état au moyen d'un protocole de routage à état des liens.

**13.** Noeud de commutation optique (N2) comportant :

un dispositif de commande selon l'une des revendications 10 à 12, des interfaces d'entrée optiques pour recevoir des canaux de longueur d'onde, des interfaces de sortie optiques pour transmettre des canaux de longueur d'onde,

des moyens de commutation transparents pour faire passer des canaux de longueur d'onde entre lesdites interfaces d'entrée optiques et lesdites interfaces de sortie optiques, et

des moyens de conversion pour générer, à partir d'un canal de longueur d'onde reçu sur une interface d'entrée, un canal de longueur d'onde ayant une longueur d'onde porteuse différente et portant sensiblement le même signal de données que le canal de longueur d'onde reçu.

FIG_1

FIG_2

## FIG_4

30

31

32

N

34

O

33

35

## FIG_3

20

23

21

22

27

26

25

24

**Europäisches Patentamt**
**European Patent Office**
**Office européen des brevets**

# RAPPORT DE RECHERCHE EUROPEENNE

Numéro de la demande

EP 09 16 4229

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | EP 1 377 108 A (ALCATEL S A [FR]) 2 janvier 2004 (2004-01-02) <br> * alinéa [0001] * <br> * alinéa [0005] - alinéa [0009]; figure 2 * <br> * alinéa [0011] - alinéa [0015] * <br> * alinéa [0028] - alinéa [0033]; figures 3a,3b,4a * <br> * alinéa [0035] - alinéa [0041]; figures 5,6 * <br> * alinéa [0043] - alinéa [0044] * <br> * alinéa [0048] - alinéa [0056]; figures 8a,8b * <br> ----- | 1-13 | INV. <br> H04J14/02 <br> H04Q11/00 |
| X | WIDJAJA I ET AL: "Study of GMPLS lightpath setup over lambda-router networks" <br> PROCEEDINGS OF IEEE INTERNATIONAL CONFERENCE ON COMMUNICATIONS - 28 APRIL-2 MAY 2002 - NEW YORK, NY, USA, IEEE, PISCATAWAY, NJ, USA, <br> vol. 5, 28 avril 2002 (2002-04-28), pages 2707-2711, XP010589973 <br> ISBN: 978-0-7803-7400-3 | 1,7-13 | |
| A | * page 2707, colonne de gauche, alinéa 1 - colonne de droite, alinéa 1 * <br> * page 2707, colonne de droite, alinéa 3 - page 2709, colonne de gauche, alinéa 1; figures 1-3 * <br> ----- <br> -/-- | 2-6 | DOMAINES TECHNIQUES RECHERCHES (IPC) <br><br> H04J <br> H04Q |

Le présent rapport a été établi pour toutes les revendications

| Lieu de la recherche | Date d'achèvement de la recherche | Examinateur |
|---|---|---|
| La Haye | 2 octobre 2009 | Roldán Andrade, J |

| Europäisches Patentamt European Patent Office Office européen des brevets | **RAPPORT DE RECHERCHE EUROPEENNE** | Numéro de la demande EP 09 16 4229 |

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A | EP 1 370 108 A (CIT ALCATEL [FR] ALCATEL LUCENT [FR]) 10 décembre 2003 (2003-12-10) * alinéa [0001] * * alinéa [0005] - alinéa [0007] * * alinéa [0010] - alinéa [0014] * * alinéa [0017] - alinéa [0023]; figures 2,3 * * alinéa [0027] - alinéa [0035]; figures 4,5a,5b,5c * ----- | 1-13 | |
| A | YONG YIN ET AL: "An improved OSPF-TE in GMPLS-based optical networks" HIGH PERFORMANCE SWITCHING AND ROUTING, 2005. HPSR. 2005 WORKSHOP ON HONG KONG, CHINA 12-14 MAY, 2005, PISCATAWAY, NJ, USA,IEEE, 12 mai 2005 (2005-05-12), pages 241-245, XP010832774 ISBN: 978-0-7803-8924-3 * page 241, colonne de gauche, alinéa 1 - colonne de droite, alinéa 4 * * page 241, colonne de droite, alinéa 6 - page 243, colonne de gauche, alinéa 2 * * page 244, colonne de gauche, dernier alinéa - colonne de droite, alinéa 2 * ----- -/-- | 1-13 | DOMAINES TECHNIQUES RECHERCHES (IPC) |

Le présent rapport a été établi pour toutes les revendications

| Lieu de la recherche | Date d'achèvement de la recherche | Examinateur |
|---|---|---|
| La Haye | 2 octobre 2009 | Roldán Andrade, J |

CATEGORIE DES DOCUMENTS CITES

X : particulièrement pertinent à lui seul
Y : particulièrement pertinent en combinaison avec un
   autre document de la même catégorie
A : arrière-plan technologique
O : divulgation non-écrite
P : document intercalaire

T : théorie ou principe à la base de l'invention
E : document de brevet antérieur, mais publié à la
   date de dépôt ou après cette date
D : cité dans la demande
L : cité pour d'autres raisons
 
& : membre de la même famille, document correspondant

EPO FORM 1503 03.82 (P04C02)

**EP 2 141 843 A1**

Europäisches
Patentamt

European
Patent Office

Office européen
des brevets

**RAPPORT DE RECHERCHE EUROPEENNE**

Numéro de la demande

EP 09 16 4229

| **DOCUMENTS CONSIDERES COMME PERTINENTS** | | | |
|---|---|---|---|
| Catégorie | Citation du document avec indication, en cas de besoin, des parties pertinentes | Revendication concernée | CLASSEMENT DE LA DEMANDE (IPC) |
| A | SEYED REZA EHSANI ET AL: "Hierarchical routing in optical networks" INFORMATION AND COMMUNICATION TECHNOLOGIES: FROM THEORY TO APPLICATIONS, 2008. ICTTA 2008. 3RD INTERNATIONAL CONFERENCE ON, IEEE, PISCATAWAY, NJ, USA, 7 avril 2008 (2008-04-07), pages 1-5, XP031258342 ISBN: 978-1-4244-1751-3 * page 1, colonne de gauche, alinéa 3 - page 2, colonne de gauche, alinéa 1 * * page 2, colonne de gauche, alinéa 8 - colonne de droite, alinéa 6 * * page 2, colonne de droite, alinéa 10 - page 4, colonne de droite, alinéa 2; figure 3 * ----- | 1-13 | |
| A | TACHIBANA T ET AL: "Dynamic Lightpath Establishment for Service Differentiation Based on Optimal MDP Policy in All-Optical Networks with Wavelength Conversion" COMMUNICATIONS, 2007. ICC '07. IEEE INTERNATIONAL CONFERENCE ON, IEEE, PI, 1 juin 2007 (2007-06-01), pages 2424-2429, XP031125983 ISBN: 978-1-4244-0353-0 * page 2424, colonne de gauche, alinéa 2 - colonne de droite, alinéa 1 * * page 2425, colonne de gauche, alinéa 2 - page 2426, colonne de gauche, alinéa 7; figures 1,2 * ----- | 1-13 | DOMAINES TECHNIQUES RECHERCHES (IPC) |

Le présent rapport a été établi pour toutes les revendications

| Lieu de la recherche | Date d'achèvement de la recherche | Examinateur |
|---|---|---|
| La Haye | 2 octobre 2009 | Roldán Andrade, J |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 09 16 4229

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

02-10-2009

| Document brevet cité au rapport de recherche | | Date de publication | Membre(s) de la famille de brevet(s) | Date de publication |
|---|---|---|---|---|
| EP 1377108 | A | 02-01-2004 | US 2004001714 A1 | 01-01-2004 |
| EP 1370108 | A | 10-12-2003 | US 2004247315 A1 | 09-12-2004 |

EPO FORM P0460

Pour tout renseignement concernant cette annexe : voir Journal Officiel de l'Office européen des brevets, No.12/82

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 1377108 A